Europäisches Patentamt

European Patent Office

Office européen des brevets

(19)

(11) Numéro de publication : **0 433 199 A1**

(12) **DEMANDE DE BREVET EUROPEEN**

(21) Numéro de dépôt : 90460046.7

(22) Date de dépôt : 07.12.90

(51) Int. Cl.⁵ : **H04N 7/20, H04N 7/01**

(30) Priorité : 15.12.89 FR 8916860

(43) Date de publication de la demande :
**19.06.91 Bulletin 91/25**

(84) Etats contractants désignés :
**DE GB**

(71) Demandeur : **ETAT FRANCAIS représenté par le Ministre des PTT (Centre National d'Etudes des Télécommunications)
38-40 rue du Général Leclerc
F-92131 Issy-les-Moulineaux (FR)**
Demandeur : **TELEDIFFUSION DE FRANCE S.A.
21-27, rue Barbès
F-92542 Montrouge Cédex (FR)**

(72) Inventeur : **Bernard, Philippe
175 rue Belle Epine
F-35510 Cesson Sévigné (FR)**
Inventeur : **Veillard, Jacques
La Vizeule, Montgermont
F-35760 Saint Grégoire (FR)**
Inventeur : **Veillard, Michel
La Beauvairie, La Mézière
F-35520 Melesse (FR)**

(74) Mandataire : **Corlau, Vincent
c/o Cabinet Vidon Immeuble Germanium 80 avenue des Buttes de Coesmes
F-35700 Rennes (FR)**

(54) **Système et décodeur de signal haute définition de la famille MAC/Paquet, compatibles avec une transmission en large bande et en bande étroite.**

(57)    L'invention concerne un système de transmission compatible pour la transmission des signaux HDMAC à travers un canal de la famille MAC/Paquet soit à large bande (typiquement un canal satellite conforme à la recommandation de la CAMR 77), soit à bande étroite (typiquement un canal de transmission terrestre hertzienne ou cablée).

Selon l'invention, ledit signal transmis présente une composante numérique de sons et données de service codée en duobinaire de type D2 identique en large bande et en bande étroite, une composante vidéo analogique distincte en large bande et en bande étroite, qui pour la transmission en bande étroite, est d'abord échantillonné à une fréquence d'échantillonnage valant x% de la fréquence d'échantillonnage du signal vidéo transmis en large bande, puis subit un traitement de filtrage dans un filtre de Nyquist à fréquence de coupure égale à x% de la fréquence de coupure du filtre de Nyquist utilisé en large bande, avant que les échantillons filtrés soient enfin relus, pour compression, à une fréquence valant x % de la fréquence de lecture des échantillons en large bande.

EP 0 433 199 A1

# SYSTEME ET DECODEUR DE SIGNAL HAUTE DEFINITION DE LA FAMILLE MAC/PAQUET, COMPATIBLES AVEC UNE TRANSMISSION EN LARGE BANDE ET EN BANDE ETROITE

Le domaine de l'invention est celui de la transmission des signaux audiovisuels et de données du type HDMAC, c'est-à-dire des signaux de la famille MAC/Paquet (multiplex temporel de données numériques, et d'un Multiplex Analogiques des Composantes vidéo (MAC)), du type destinés à transmettre un signal issu d'une source de télévision dite de "haute définition" (HD) à travers un canal de la famille MAC/Paquet.

Par canal de la famille MAC/Paquet, on entend tout canal permettant de transmettre un signal de la famille MAC/Paquet, du type correspondant aux normes DMAC ou D2MAC.

Plus particulièrement, l'invention a pour objet de fournir un tel système qui soit compatible :

- d'une part pour la transmission des signaux HDMAC à travers un canal de la famille MAC/Paquet soit à large bande (typiquement un canal satellite conforme à la recommandation de la CAMR 77 — Conférence Administrative Mondiale de Radiocommunication 1977 —), soit à bande étroite (typiquement un canal de transmission terrestre hertzienne ou cablée).

- d'autre part, pour la réception du signal HDMAC transmis, aussi bien dans un récepteur TVHD que dans un récepteur de télévision conventionnel.

Historiquement, la norme de transmission MAC de signaux de télévision à été élaborée pour la transmission de signaux de télévision conventionnels.

En règle générale les images T.V.H.D. (Télévision en Haute Définition) destinées à être diffusées à travers un canal de type MAC/Paquet ont des résolutions horizontales et verticales doubles comparées à celles de la télévision conventionnelle, avec un format d'image 16/9, plus large que le 4/3 actuel.

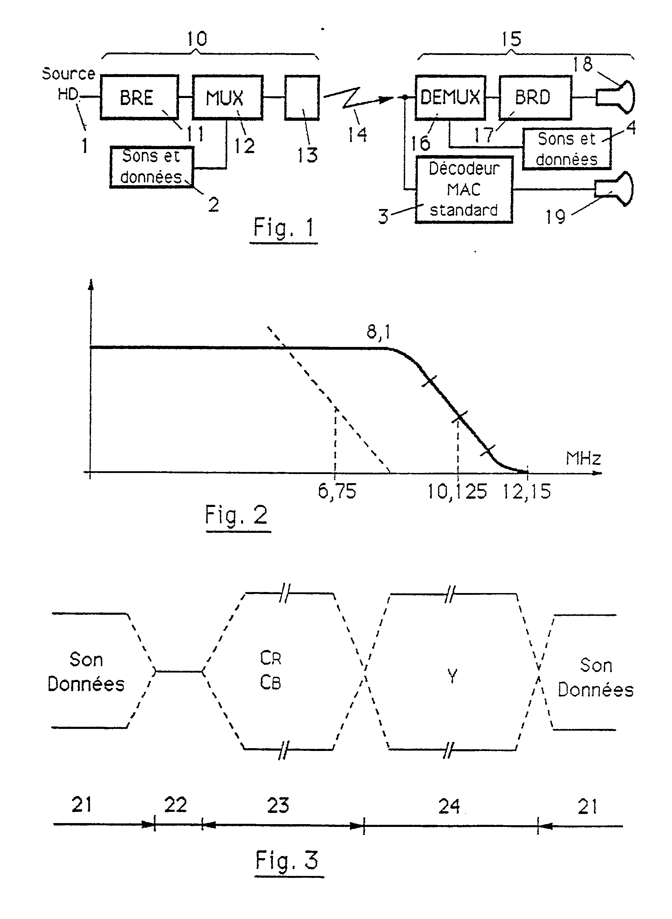

De façon connue, la chaîne de transmission typique d'un signal HDMAC comporte essentiellement les modules représentés en figure 1 (voir notamment "Le système HDMAC, principes et aspects bande de base", Marie-Jean COLAITIS in l'Onde Electrique - Juillet.Août 1989, Vol.69, N°4, pp.13 à 19).

- à l'émetteur 10, un codeur HDMAC 11 à réduction de bande (en anglais BRE : Bandwith Reduction Encoder) transformant le signal HD source en signal susceptible de subir la mise en forme MAC dans le codeur MAC 12. Le codeur MAC 12 assure de façon classique la compression des composantes vidéo, la mise en paquets des composantes numériques 2 (sons et données), et la construction du multiplex à transmettre ; avant diffusion, le multiplex est traité dans un module 13 d'adéquation spécifique au canal de transmission 14,

- au récepteur 15, un décodeur MAC 16 et un décodeur HDMAC 17 à restitution de bande (en anglais BRD: Bandwith Restoration Decoder), assure les fonctions inverses des modules 12 et 11 de l'émetteur, afin de restituer l'image HD reconstituée sur un écran HD 18. Grâce au principe de codage vidéo 11 retenu, des récepteurs MAC à écran traditionnel 10 peuvent afficher une image à définition classique avec des dégradations acceptables en traitant le signal transmis dans un décodeur MAC standard 3.

De façon classique pour les canaux de transmission MAC, les techniques de compression vidéo utilisées au codeur MAC 12 assurent un échantillonnage des composantes de luminance et de chrominance du signal vidéo à une première fréquence (13,5 MHz et 6,75 MHz respectivement), et une relecture pour transmission à une seconde fréquence de compression (20,25 MHz), ce qui permet d'obtenir un taux de compression de 3/2 et de 3/1 respectivement pour la luminance et la chrominance.

L'information vidéo du signal TVHD peut représenter de 4 à 10 fois le volume d'information vidéo d'un signal conventionnel. Le codage HDMAC 11 réalisé à l'émetteur préalablement à la compression vidéo du codeur MAC 12, a donc pour objet de réduire l'occupation de la bande passante du signal source pour en permettre l'adaptation aux normes MAC, et donc au canal de transmission.

Cette opération met principalement en oeuvre des techniques de sous-échantillonnage des composantes du système vidéo, essentiellement par "oubli" de certains points de l'image source. Ces points "oubliés" peuvent être reconstitués au décodeur HDMAC 17, essentiellement par reconstitution à partir de données d'assistance (DATV) décrivant principalement le mode de sous-échantillonnage choisi.

Bien entendu, il est nécessaire que le canal de transmission conserve l'indépendance entre les échantillons successifs à 20,25 MHz, pour pouvoir reconstituer l'image au récepteur.

Actuellement, cette condition est vérifiée sur les canaux de diffusion par satellite, où le canal en bande de base a un support de 12 MHz environ, avec une atténuation progressive entre 8 et 12 MHz, et un point à mi-amplitude de 10,125 MHz déterminant ce qu'on pourrait appeler, par simplification, la bande passante utile du canal (fig.2).

Parallèlement à ces conditions de transmission, que l'on peut considérer comme une transmission du signal HDMAC en "large bande", la télévision Haute Définition a également vocation à être transmise en "bande étroite", notamment pour une diffusion hertzienne terrestre et une distribution sur les réseaux câblés.

En transmission en bande étroite, la bande passante utile du canal de transmission est typiquement inférieure de 30% à la bande passante utile du canal satellite (6,75 MHz environ, au lieu de 10,125 MHz mentionnés plus haut). En conséquence, afin de conserver une restitution de l'image psycho-visuellement acceptable au récepteur, il est nécessaire de faire subir un traitement spécifique différent au signal en bande de base. En effet, de façon connue, si on coupe à 6,75 MHz le signal HDMAC originellement à 10,125 MHz, on obtient une perte d'informations inacceptable au récepteur.

L'objectif de la présente invention est de fournir un système de transmission, et un principe de codage/décodage d'un signal de télévision Haute Définition, de façon à le transmettre dans un canal de transmission à bande étroite, en assurant une double compatibilité :

- une compatibilité dite "descendante", permettant la restitution d'une image psycho-visuellement acceptable du signal Haute Définition/bande étroite sur un téléviseur conventionnel ;
- une compatibilité dite "montante", permettant à terme d'obtenir une image Haute Définition sur un récepteur Haute Définition essentiellement conçu pour la réception de signaux HDMAC transmis sur canal à large bande. En effet, en maintenant les principes essentiels de codage et de multiplexage dans la chaîne de transmission HDMAC en bande étroite, on peut prévoir qu'on pourra conserver les éléments essentiels des récepteurs MAC ou HDMAC, tels que les circuits intégrés de démodulation, de démultiplexage, et de décodage audio et vidéo, au prix de modifications minimales à apporter aux modules de traitement du signal du récepteur.

Un objectif complémentaire de l'invention est de fournir un tel système de transmission mettant en oeuvre des techniques et des modules de codage et de multiplexage le plus possible communes et/ou compatibles à une transmission HDMAC en large bande et en bande étroite.

Un autre objectif de l'invention est de fournir un tel système de transmission assurant une compatibilité totale avec les principes d'embrouillage et de contrôle d'accès retenus jusqu'à présent pour les récepteurs MAC et HDMAC large bande (voir notamment la norme D2MAC/Paquet).

Ces objectifs, ainsi que d'autres qui apparaîtront par la suite, sont atteints à l'aide d'un système de transmission d'un signal de TVHD (télévision en haute définition) sous forme d'un signal transmis de la famille MAC-/Paquet, à multiplexage temporel des composantes vidéo analogiques et des composantes numériques de données d'assistance (DA) à la reconstruction d'images HD au récepteur, et de sons et données de service, caractérisé en ce qu'il comprend des premiers moyens de transmission dudit signal de TVHD à travers un canal à large bande, et des seconds moyens de transmission dudit signal TVHD à travers un canal à bande étroite, le taux de réduction de la largeur de bande étant de x% entre le canal à large bande et le canal à bande étroite, ledit signal transmis comportant une composante numérique de sons et données de service codée en duobinaire de type D2 identique en large bande et en bande étroite, et une composante vidéo analogique distincte selon que ledit signal de TVHD est transmis en large bande ou en bande étroite,

et en ce que, pour la transmission en bande étroite, ladite composante vidéo analogique est d'abord échantillonné à une fréquence d'échantillonnage valant x% de la fréquence d'échantillonnage du signal vidéo transmis en large bande, puis subit un traitement de filtrage dans un filtre de Nyquist à fréquence de coupure égale à x% de la fréquence de coupure du filtre de Nyquist utilisé en large bande, avant que les échantillons filtrés soient enfin relus, pour compression, à une fréquence valant x% de la fréquence de lecture des échantillons en large bande.

De cette façon, si on fait notamment le choix d'une transmission de type D2MAC, les composantes vidéo (luminance et chrominance) doivent subir un traitement différent suivant que le signal est transmis en large bande ou en bande étroite, les composantes numériques de sons et de données de service du signal restant identiques. Ceci est notamment permis du fait que ces composantes du signal source sont codées en duobinaire de type D2, ce type de codage étant directement compatible avec une transmission en bande étroite du type envisagé ici.

Selon une autre caractéristique de l'invention, les données d'assistance de la composante numérique du multiplex sont soit codées en duobinaire préférentiellement au même débit que le son et les données de service, soit préférentiellement échantillonnées à la même fréquence d'échantillonnage que le signal de luminance de la composante vidéo et traitées par la même voie que ladite composante vidéo.

Ceci permet de rendre la transmission des données compatibles avec la transmission en bande étroite, sans nuire au débit instantané de ces données.

Dans un mode de réalisation avantageux, dans lequel l'émetteur et le récepteur comprennent des moyens de désembrouillage tels que spécifiés pour la famille MAC-Paquet comportant des moyens de calcul fournissant, à partir d'informations sources déterminées, une information d'adressage de pixels de coupure de ligne sous la forme du rang de chacun desdits pixels, ladite information d'adressage est avantageusement transcodée à l'émetteur et au récepteur en bande étroite par réduction arithmétique selon ledit rapport à x%.

Le décodeur du tel système de transmission selon l'invention qui permet la réception d'un signal transmis soit en large bande, soit en bande étroite comprend avantageusement des moyens uniques de démultiplexage du signal D2MAC en bande de base, et de décodage du signal vidéo, lesdits moyens uniques de décodage du signal vidéo coopérant avec des moyens de génération d'horloges fournissant d'une part un premier jeu d'horloges de décodage du signal vidéo en large bande, et d'autre part un second jeu d'horloges de décodage du signal vidéo en bande étroite, lesdits jeux d'horloges étant sélectivement activés pour piloter lesdits moyens uniques de décodage du signal vidéo en fonction de la largeur de bande du canal de transmission du signal reçu.

Selon une caractéristique préférentielle de l'invention, lesdits moyens uniques de décodage vidéo comprennent d'une part un module unique de conversion analogique numérique du multiplex reçu en bande de base, fournissant des échantillons de luminance et de chrominance à une mémoire RAM vidéo unique, ledit module CAN étant sélectivement piloté par la fréquence de transmission comprimée correspondant à la largeur de bande du canal de transmission, et d'autre part des moyens uniques de gestion de ladite mémoire vidéo, selon des séquences d'écriture et de lecture distincts.

Ainsi, les récepteurs HDMAC actuellement mis au point pour la réception de signaux transmis en large bande ne nécessitent que l'adjonction d'un module de génération d'un second jeu d'horloges de pilotage du module de décodage vidéo, pour assurer la réception des signaux Haute Définition transmis en bande étroite, la quasi totalité des modules de traitement du signal, notamment du signal vidéo, étant compatible et donc conservée. Ceci est crucial, notamment du fait que ces modules sont essentiellement réalisés sous forme de circuits intégrés spécifiques standardisés.

Dans un mode de réalisation avantageux, le récepteur comprend des moyens de reconstitution d'une image de format large à partir du signal d'image obtenu en sortie du démultiplexeur, en centrant l'image de format étroit entre deux bandes visuelles non utiles. Lesdits moyens de reconstitution d'une image de format large sont constitués par exemple soit d'une interface spécifique entégrée entre le démultiplexeur et le BRD, soit d'une séquence spécifique de lecture décomprimée des échantillons de la composante vidéo dans le démultiplexeur

D'autres caractéristiques et avantages de l'invention apparaîtront à la lecture de la description suivante d'un mode de réalisation préférentiel de l'invention, donné à titre illustratif et non limitatif, et des dessins annexés, dans lesquels :

- la figure 1 représente une chaîne HDMAC de transmission d'un signal D à travers un canal de type MAC/Paquet ;
- la figure 2 est un diagramme schématisant la largeur utile des canaux de diffusion TV satellite (large bande), et terrestre (bande étroite) ;
- la figure 3 représente la structure d'un signal de type MAC/Paquet ;
- la figure 4 schématise les trois voies d'un décodeur MAC par chaîne de transmission HDMAC conventionnelle ;
- la figure 5 schématise un récepteur selon l'invention pour signal D2-HDMAC à bande étroite lorsque les données d'assistance sont transmises à 10,125 Mbit/s en duobinaire ;
- la figure 6 schématise un récepteur selon l'invention pour signal D2-HDMAC à bande étroite lorsque les données d'assistance sont transmises à 13,5 Mbit/s avec codage binaire ou duobinaire ;
- la figure 7 schématise un récepteur selon l'invention compatible D2-HDMAC large bande et bande étroite (avec données d'assistance à 13,5 Mbit/s).
- les figures 8, 9 et 10schématisent trois modes de réalisation de la chaîne de reconstruction du signal analogique de l'image HD au récepteur, en fonction de la fréquence d'échantillonnage au décodeur.

La figure 3 illustre la construction du multiplex correspondant à une ligne de télévision en bande de base sous codage MAC dans le cas d'une transmission à large bande.

Le multiplex de la figure 3 est constitué successivement d'une portion 21 de sons et données, sous forme de paquets, d'une période d'alignement 22, de la composante 23 de chrominance du signal vidéo (signal de différence de couleur), et de la composante de luminance 24 du signal vidéo, avant de retrouver la portion de sons et données 21 de la ligne suivante.

Plus précisément, dans des signaux MAC connus (DMAC, D2MAC) ;
- le multiplexage numérique de sons et données (à savoir les données de service (clés d'embrouillage, télétexte,...)) est constitué par un signal codé en duobinaire, transmis à un débit instantané de 20,25 Mbits/s dans le cas d'un signal DMAC/Paquet, ou à un débit instantané de 10,125 Mb/s pour un signal D2MAC/-Paquet ;
- les échantillons correspondants à la luminance sont mémorisés à la fréquence de 13,5 MHz et relus à la fréquence de 20,25 MHz, ce qui correspond à un taux de compression de 3/2 et un temps d'occupation de 52 µs × 2/3 ≈ 34 µs
- les échantillons de chrominance sont mémorisés à la fréquence de 6,75 MHz et relus à la fréquence de

4

20,25 MHz d'où un taux de compression de 3/1 et un temps d'occupation de 52 µs/3 ≈ 17,5 µs.

Le système HDMAC classique consiste à transporter une image Haute Définition à travers un canal MAC, c'est-à-dire utilisant le multiplex de la figure 2. Il existe plusieurs normes de production d'un signal HDTV, notamment à titre d'exemple :

- Nombre de lignes de balayage : 1 250
- Format image : 16/9
- Entrelacé d'ordre : 2
- Fréquence trames : 50 Hz

Le système HDMAC est basé sur une parfaite compatibilité avec les récepteurs classiques. Cela impose un compromis entre l'image HD et l'image améliorée utilisant le système D2-MAC/PAQUET.

Le HDMAC va donc exploiter au maximum les capacités de transmission du canal MAC à bande limitée pour transmettre le signal de TVHD ayant une bande passante au minimum 4 fois plus large. Le système de codage HDMAC a donc pour premier objectif de réduire la bande passante du signal TVHD incident d'un facteur 4. Pour ce faire, l'occupation du canal est optimisée en gérant au mieux son contenu spectral et l'énergie qu'on lui fait véhiculer.

L'opération qui permet de réduire d'un facteur 4 le nombre de points à transmettre est basée sur une opération de sous-échantillonnage.

D'une manière générale, pour tenir compte des effets psycho-visuels du sous-échantillonnage, chaque image (ou encore chaque sous-image "homogène" découpée dans l'image) est susceptible de subir un traitement de sous-échantillonnage choisi parmi trois traitements possibles, en fonction de son "mouvement" :

- Voie 1 : période d'échantillonnage de 80 ms/12,5 Hz (sur 4 trames) non compensée en mouvement ; cette voie est activée pour une plage d'activité représentant un "déplacement" des points de l'image comprise entre 0 et 0,5 pixels/40 ms

- Voie 2 : période d'échantillonnage de 40 ms/25 Hz (sur 2 trames) compensée en mouvement, pour une plage d'activité de 0,5 à 6 pixels/40 ms

- Voie 3 : période d'échantillonnage de 20 ms/50 Hz (sur 1 trame) non compensée en mouvement, pour une plage d'activité supérieure à celle définie pour la voie 2.

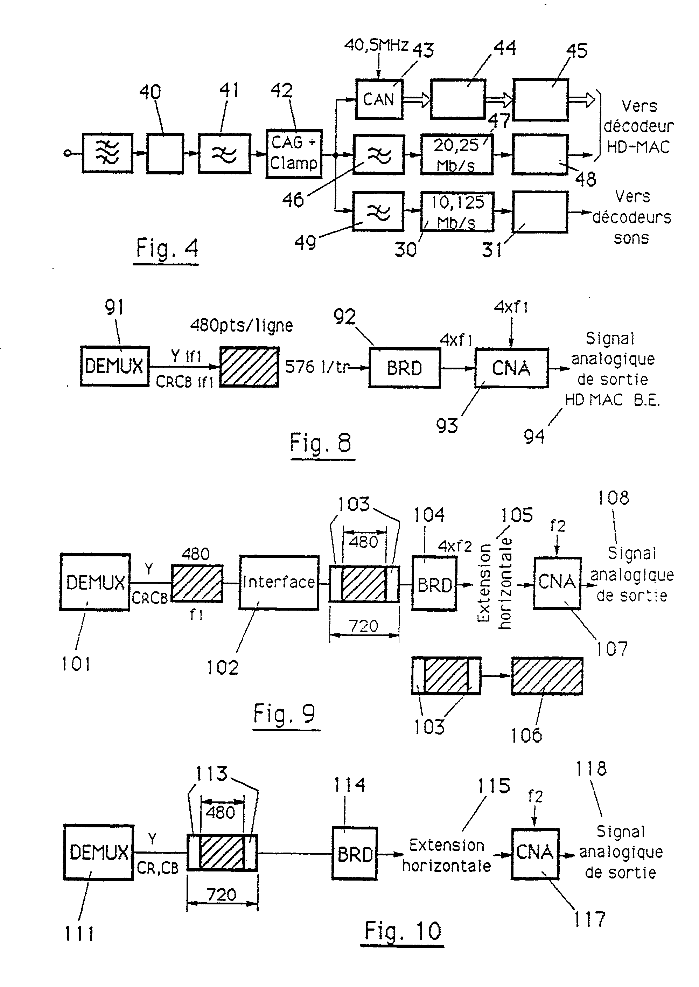

Après sous-échantillonnage, le signal HDMAC "large bande" comporte alors les trois composantes constitutives du multiplex de type MAC. Au récepteur, ces trois composantes sont traitées comme illustré en Fig.4.

Après démodulation 40, filtrage passe bas 41 à 14 MHz, et traitement 42 de Contrôle Automatique de Gain (CAG) avec récupération de la composante continue, le signal est divisé en trois voies :

* La voie image réalise les opérations suivantes :
  - conversion analogique numérique 43 à la fréquence de 40,5 MHz,
  - filtrage demi-Nyquist numérique 44 à 16 coefficients qui réalise également la fonction d'égaliseur linéaire (suivi éventuellement d'un traitement 45 d'égalisation et de désaccentuation non linéaires) ;

* Les données d'assistance à 20,25 Mbit/s sont appliquées à un filtre passe-bas 46 de largeur de bande égale à 9 MHz environ, puis au décodeur duobinaire 47 qui utilise l'algorithme de Viterbi, avant débrassage 48 ;

* Enfin, la composante D2 (sons et données utiles) à 10,125 Mbit/s subit les traitements de filtrage passe-bas 49 à 5 MHz, de décodage 30 à 10,125 Mbit/s, de débrassage, désentrelacement et de synchronisation paquets (31) d'un décodeur D2-MAC/Paquet classique.

Les échantillons HDMAC et les données d'assistance sont acheminés ensuite vers le BRD (décodeur HDMAC) du récepteur, tandis que les échantillons issus de la voie sons et données utiles sont envoyés vers les décodeurs correspondants.

Le canal à bande étroite avec lequel doit être compatible le système de transmission à signaux de TVHD selon l'invention présente un profil de bande passante comme représenté en pointillé en Fig.2. Il correspond à un filtre équivalent définissant un canal de 8 MHZ de largeur de bande, avec atténuation progressive et un point à mi amplitude à la fréquence de 6,75 MHz.

Il est donc nécessaire de sous-échantillonner plus fortement le signal vidéo que pour le HDMAC conventionnel, comme il apparaît à la lecture de la Table I.

## TABLE I

COMPARAISON DES CARACTERISTIQUES DES CODEURS HD-MAC EN TRANSMISSION SATELLITE (LARGE BANDE) ET TERRESTRE (BANDE ETROITE)

| | TVHD source BRE | | | | TVHD reconstituée BRD | |
|---|---|---|---|---|---|---|
| lignes/trames | *1152 -► | 576 | HDMAC | 576 -► | 1152 |
| | | | -► | "large bande" -► | | |
| points/ligne | * 1440 -► | 720 | | | 720 -► | 1440 |
| | | | | | | |
| lignes/trames | 1152 -► | 576 | HDMAC | 576 -► | 1152 |
| | | | -► | Bande -► | | |
| points/ligne | 1440 -► | 480 | Etroite | 480 -► | 960 |

* les valeurs indiquées correspondent aux lignes et points actifs du point de vue de l'information visuelle

La solution retenue dans l'invention consiste à choisir un système de transmission permettant de transmettre des signaux TVHD d'une part en large bande et d'autre part en bande étroite (définie de façon générale comme étant d'une largeur valant x% la largeur de bande en large bande), suivant les principes optimalisés suivants :

- ledit signal transmis présente une composante numérique de sons et données de service, codée en duobinaire de type D2 identique en large bande et en bande étroite,
- il comporte une composante vidéo analogique distincte en large bande et en bande étroite,
- pour la transmission en bande étroite, ledit signal vidéo analogique est d'abord échantillonné à une fréquence d'échantillonnage valant x% de la fréquence d'échantillonnage du signal vidéo transmis en large bande, puis subit un traitement de filtrage dans un filtre de Nyquist à fréquence de coupure égale à x% de la fréquence de coupure du filtre de Nyquist utilisé en large bande, avant que les échantillons filtrés soient enfin relus, pour compression, à une fréquence valant x% de la fréquence de lecture des échantillons en large bande.

Dans le cas de la diffusion de TV par canal satellite (large bande) et par voie terrestre (bande étroite), le rapport est de x% = 6,75 MHZ/10,125 MHz = 2/3.

Ainsi, si le canal à large bande représente une largeur de bande utile de 10,125 MHz, et le signal vidéo comporte une composante de luminance échantillonnée à 13,5 MHz et une composante de chrominance échantillonnée à 6,75 MHz, lesdits échantillons de luminance et de chrominance étant relus, pour compression, à la fréquence de 20,25 MHz, le canal à bande étroite représente une largeur de bande utile de 6,75 MHz, les composantes vidéo de luminance et de chrominance étant échantillonnées respectivement à 9 MHz et à 4,5 MHz, et lesdits échantillons étant relus, pour compression, à une fréquence de 13,5 MHz.

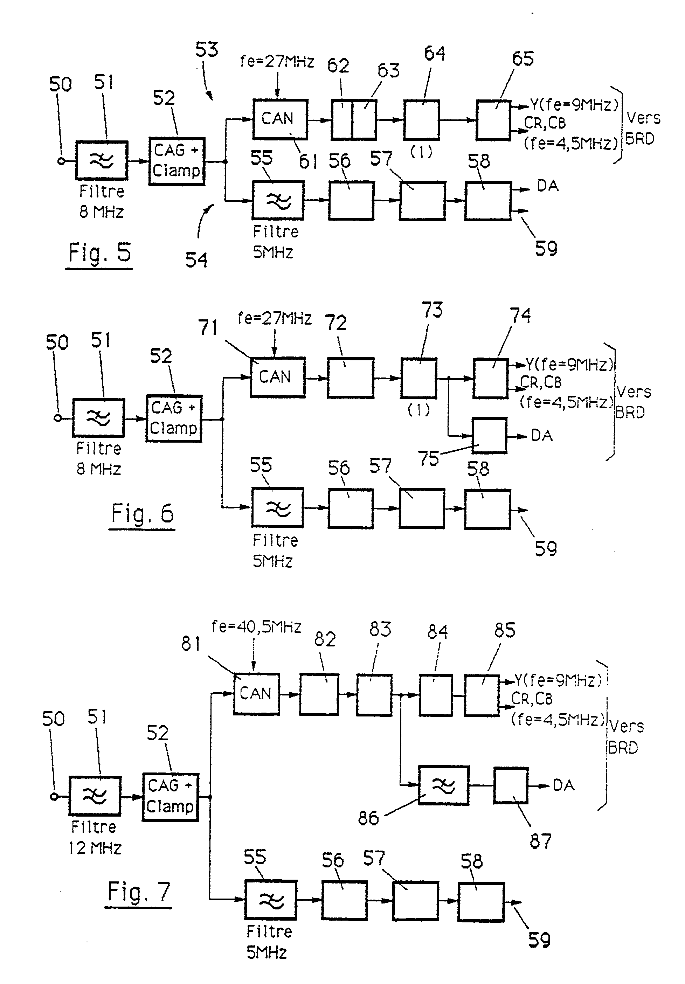

Les figures 5, 6 et 7 représentent quelques modes de réalisation de la chaîne de démultiplexage au récepteur.

EP 0 433 199 A1

Le signal D2-HDMAC démodulé 50 est appliqué après filtrage passe-bas 51 à 8 MHz à un circuit 52 d'alignement et de régulation de niveau.

Puis, le signal est divisé en deux voies 53, 54, l'une (54) des voies traitant la composante D2 (sons et données de service), commune aux trois versions de récepteurs des fig 5, 6, 7.

La composante D2 subit les traitements suivants :
- filtrage passe-bas 55 à 5 MHz,
- égalisation 56 fonctionnant à une fréquence de 10,125 MHz ou 20,25 MHz. Cette fonction d'égalisation permet de réduire l'influence des distorsions du canal de transmission et est optionnelle,
- décodage duobinaire 57 des données à 10,125 Mbit/s,
- module 58 de débrassage, désentrelacement, et extraction de la synchronisation paquets.

Les paquets 59 correspondant aux signaux de sons et données de service sont fournis au décodeur correspondant.

La figure 5 présente un premier mode de réalisation d'un récepteur selon l'invention pour signal D2-HDMAC à bande étroite avec les données d'assistance à 10,125 Mbit/s.

Dans ce mode de réalisation, la voie image 53 subit les traitements suivants :
- conversion analogique-numérique 61 à la fréquence de 27 MHz,
- filtrage de Nyquist 62 réalisé sous forme numérique,
- égalisation du signal 63. Cette fonction 63 peut être combinée avec le filtrage de Nyquist 62 : dans ce cas, les coefficients du filtre sont adaptatifs et sont calculés par un algorithme d'égalisation,
- décimation 64 dans un rapport 2 permettant de restituer les échantillons du signal HDMAC à 13,5 MHz,
- décompression temporelle 65 du signal de luminance dans le rapport 1, 5 et des signaux de chrominance dans le rapport 3, de façon à récupérer une composante de luminance Y à 9 MHz et une composante de chrominance $C_R$, $C_B$ à 4,5 MHz.

Ces signaux sont fournis au BRD ainsi que les paquets transmettant les données d'assistance, issus du décodeur duobinaire à 10,125 Mbit/s.

La figure 6 représente un second mode de réalisation d'un récepteur selon l'invention pour signal D2-HDMAC à bande étroite avec les données d'assistance transmises à 13,5 Mbit/s.

Ce mode de réalisation correspond au cas où, à l'émetteur, les DA de la composante numérique du multiplex sont échantillonnées à la même fréquence d'échantillonnage que la composante de luminance du signal vidéo ce qui permet avantageusement d'augmenter la ressource DA dans le rapport 4/3. de plus, ceci permet de traiter les DA au moins en partie sur la même voie que la composante vidéo.

Ainsi, dans cette version de récepteur, les signaux d'image HDMAC et les données d'assistance (DA) à 13,5 Mbit/s subissent les traitements communs décrits ci-dessous :
- conversion analogique-numérique 71 à la fréquence de 27 MHz,
- filtrage de Nyquist et égalisation 72,
- décimation 73 dans un rapport 2.

Après décimation, les échantillons du signal d'image HDMAC subissent une décompression temporelle 74 dans le rapport 1,5 pour la luminance et dans le rapport 3 pour la chrominance.

Les échantillons à 13,5 MHz correspondant à la composante de données d'assistance sont fournies au décodeur binaire ou duobinaire 75 qui délivre les salves de données sous forme binaire (niveaux logiques 0 ou 1) au BRD. Avantageusement, lorsque les DA sont codées en binaire, elles sont transmises en transcodant les deux états logiques du signal en niveau bas et niveau haut de la composante de luminance. Dans le cas d'un codage en duobinaire, on transcode les trois états logiques du signal préférentiellement en niveaux bas, moyen et haut de la composante de luminance du signal vidéo.

Enfin, la figure 7 schématise un mode de réalisation avantageux d'un récepteur compatible D2-MAC large bande et bande étroite.

Selon l'invention, cette version du récepteur permet de traiter l'un et l'autre des deux signaux suivants :
- D2-HDMAC à large bande avec les données d'assistance codées en duobinaire à 20,25 Mbit/s,
- D2-HDMAC à bande étroite avec les données d'assistance codées en binaire ou duobinaire à 13,5 Mbit/s.

Dans cette version avantageuse de récepteur "bistandard", les signaux d'image HDMAC et les données d'assistance subissent les traitements communs décrits ci-après, grâce aux principes de compatibilité entre large bande et bande étroite retenus pour le système de transmission de l'invention :
- conversion analogique-numérique 81 à la fréquence de 40,5 MHz,
- filtrage de Nyquist et égalisation 82. Les coefficients de filtre sont sélectionnés pour que la fréquence de coupure soit égale à 10,125 MHz pour le signal à large bande et à 6,75 MHz pour le signal à bande étroite,
- décimation 83 dans un rapport 2 ou 3.

La décimation consiste à sélectionner un échantillon sur deux dans le cas du signal à large bande, ce qui permet de restituer des échantillons à 20,25 MHz, et un échantillon sur trois dans le cas du signal à bande

7

étroite, ce qui permet de restituer des échantillons à 13,5 MHz. Le choix du rapport de décimation est éffectué par commutation d'une fréquence d'horloge à l'autre.

Après décimation 83, la composante image (HDMAC) du signal subit les traitements suivants :

- désaccentuation non linéaire 84 appliquée seulement au signal à large bande (cette opération permet de réduire l'influence du bruit en diffusion par satellite),
- décompression temporelle 85 du signal de luminance dans le rapport 1, 5 et des signaux de chrominance dans le rapport 3.

Après décimation 83, la composante de données d'assistance à 20,25 Mbit/s ou 13,5 Mbits/s subit les traitements suivants :

- filtrage passe-bas 86. Dans le cas où les données d'assistance sont codées en duobinaire, les coefficients du filtre sont choisis pour que la fréquence de coupure soit égale à 9 MHz environ pour un débit de 20,25 Mbit/s (D2-HDMAC à large bande) et à 6 MHz environ pour un débit de 13,5 Mbit/s (D2-HDMAC à bande étroite). Dans le cas où les données d'assistance sont codées en binaire, le filtre est transparent,
- décodage duobinaire ou binaire 87. Les données sortant du décodeur se présentent sous la forme de salves binaires (niveaux logiques 0 ou 1) qui sont fournies au BRD.

Quel que soit le mode de réalisation du démultiplexeur, les échantillons vidéo sont ensuite transmis au BRD avec les données d'assistance.

Le BRD a notamment pour fonction de reconstituer l'image HD, par application des traitements de sous-échantillonnage inverses à ceux mis en oeuvre à l'émetteur.

Selon l'invention, lorsqu'en large bande, le signal vidéo est sous-échantillonné en traitant chaque image ou bloc d'image, à travers une voie de sous-échantillonnage choisie parmi au moins deux voies possibles en fonction d'un critère d'erreur de reconstitution de l'image ou du bloc d'image respectivement, il est avantageux de supprimer une desdites voies pour la transmission en bande étroite. Ainsi, lorsque les voies de sous-échantillonnage sont respectivement une première voie avec une période d'échantillonnage de 80 ms stable sur quatre trames, une seconde voie avec une période d'échantillonnage de 40 ms stable sur deux trames, et une troisième voie avec une période d'échantillonnage de 20 ms stable sur une trame, il est avantageux que ladite voie supprimée soit la voie à période d'échantillonnage de 80 ms. En effet, la coupure du canal de transmission à 6,75 MHz, en bande étroite provoque une dégradation de l'image sous-échantillonnée en voie 3 (essentiellement due au shuffling (brassage)), qui nécessiterait sinon de prévoir un post-filtrage spécifique.

Les figures 8, 9 et 10 schématisent deux modes de réalisation possibles de la chaîne de reconstruction du signal analogique de l'image HD au récepteur, en fonction de la fréquence d'échantillonnage au décodeur HDMAC :

- dans le premier mode de réalisation de la figure 8, on utilise une fréquence d'échantillonnage $f_1$ égale à x% de la fréquence d'échantillonnage $f_2$ d'un BRD HDMAC large bande. De cette façon, les composantes de luminance Y et de chrominance $C_R$, $C_B$ en sortie du démultiplexeur 91 correspondent à une image "bande étroite" de 480 points/ligne et 576 lignes utiles par trame, pour un canal "bande étroite" de 8 MHz. Le décodeur 92 assure ensuite la reconstitution de l'image HD, sous forme d'échantillons délivrés à 4 x $f_1$ (fréquence de travail de sortie HD) au CNA 93 afin d'obtenir le signal analogique de sortie 94.

- dans le second mode de réalisation de la figure 9, on utilise une interface 102 après le démultiplexeur 101 (identique au démultiplexeur 91 de la figure 8), afin de restituer une image de format "large" (720 points utiles par ligne) en ajoutant des bandes noires (ou équivalent) 103 de chaque côté de l'image à 480 points/ligne. L'interface 102 a pour fonction de réaliser un recentrage des composantes vidéo dans l'écran en leur faisant subir une compression horizontale dans un rapport 3/2.

- dans le troisième mode de réalisation de la figure 10, on réalise une lecture "astucieuse" des composantes de luminance Y et de chrominance $C_R$, $C_B$, dans la mémoire classique du démultiplexeur de façon à fournir en sortie du démultiplexeur 111 une image de format large telle que mentionnée dans le second mode de réalisation de la figure 9. Ceci est obtenu simplement par mise en oeuvre d'une décompression appropriée, dans laquelle la luminance est lue à la même fréquence que la fréquence de réception, et repositionnée en milieu d'image (entre les bandes noires 113), et la chrominance est lue à une fréquence moitié avant d'être également recentrée dans le format large.

Dans le second et troisième modes de réalisation respectivement, l'image de format large est ensuite alimentée au BRD 104,114 dont la fréquence de travail $f_2$ est identique à celle des BRD de la chaîne HDMAC conventionnelle. Ceci présente l'avantage d'une compatibilité totale des circuits impliqués, notamment des mémoires par lesquelles sont conservés le dimensionnement, et donc les séquences d'écriture/lecture. Le signal de sortie du BRD 104,114 subit ensuite une extension horizontale 105,115, qui permet d'étirer l'image sur la totalité des 1440 points par ligne, avec disparition des bandes noires latérales 103,113, afin de reconstituer l'image HD visualisable 106, convertie en signal de sortie 108,118 à travers le CNA 107,117.

**Revendications**

1. Système de transmission d'un signal de TVHD (télévision en haute définition) sous forme d'un signal transmis de la famille MAC/Paquet, à multiplexage temporel des composantes vidéo analogiques et des composantes numériques de données d'assistance (DA) à la reconstruction d'images HD au récepteur, et de sons et données de service, caractérisé en ce qu'il comprend des premiers moyens de transmission dudit signal de TVHD à travers un canal à large bande, et des seconds moyens de transmission dudit signal TVHD à travers un canal à bande étroite, le taux de réduction de la largeur de bande étant de x% entre le canal à large bande et le canal à bande étroite, ledit signal transmis comportant une composante numérique de sons et données de service codée en duobinaire de type D2 identique en large bande et en bande étroite, et une composante vidéo analogique distincte selon que ledit signal de TVHD est transmis en large bande ou en bande étroite, et en ce que, pour la transmission en bande étroite, ladite composante vidéo analogique est d'abord échantillonné à une fréquence d'échantillonnage valant x% de la fréquence d'échantillonnage du signal vidéo transmis en large bande, puis subit un traitement de filtrage dans un filtre de Nyquist à fréquence de coupure égale à x% de la fréquence de coupure du titre de Nyquist utilisé en large bande, avant que les échantillons filtrés soient enfin relus, pour compression, à une fréquence valant x% de la fréquence de lecture des échantillons en large bande.

2. Système selon la revendication 1 caractérisé en ce que les données d'assistance de la composante numérique du multiplex sont codées en duobinaire de type D2.

3. Système selon la revendication 1 caractérisé en ce qu'au moins pour la transmission en bande étroite, les données d'assistance de la composante numérique du multiplex sont échantillonnées à la même fréquence d'échantillonnage que le signal de luminance de la composante vidéo et traitées par la même voie (71, 72, 73) que ladite composante vidéo.

4. Système selon la revendication 3, caractérisé en ce que les échantillons de données d'assistance sont codés en binaire et sont transmis en transcodant les deux états logiques du signal en niveau bas et niveau haut de la composante de luminance.

5. Système selon la revendication 3, caractérisé en ce que les échantillons de données d'assistance sont codés en duobinaire avec un transcodage tel que les trois états du signal codé correspondent préférentiellement aux niveaux bas, moyen et haut de la composante de luminance du signal vidéo.

6. Système selon l'une quelconque des revendications 1 à 5 caractérisé en ce que l'émetteur et le récepteur comprennent des moyens de désembrouillage tels que spécifiés pour la famille MAC-Paquet comportant des moyens de calcul fournissant, à partir d'informations sources déterminées, une information d'adressage de pixels de coupure de ligne sous la forme du rang de chacun desdits pixels, caractérisé en ce que ladite information d'adressage est transcodée à l'émetteur et au récepteur en bande étroite par réduction arithmétique selon ledit rapport à x%.

7. Système selon l'une quelconque des revendications 1 à 6, du type dans lequel le signal vidéo est sous-échantillonné en traitant chaque image ou bloc d'image, à travers une voie de sous-échantillonnage choisie parmi au moins deux voies possibles en fonction d'un critère d'erreur de reconstitution de l'image ou du bloc d'image respectivement, caractérisé en ce qu'on supprime une desdites voies pour la transmission en bande étroite.

8. Système selon la revendication 7 dans lequel les voies de sous-échantillonnage sont respectivement une première voie avec une période d'échantillonnage de 80 ms stable sur quatre trames, une seconde voie avec une période d'échantillonnage de 40 ms stable sur deux trames, et une troisième voie avec une période d'échantillonnage de 20 ms stable sur une trame, caractérisé en ce que ladite voie supprimée est ladite première voie à période d'échantillonnage de 80 ms.

9. Système selon l'une quelconque des revendications 1 à 8, dans lequel le canal à large bande représente une largeur de bande utile de 10,125 MHz, et le signal vidéo comporte une composante de luminance échantillonnée à 13,5 MHz et une composante de chrominance échantillonnée à 6,75 MHz, lesdits échantillons de luminance et de chrominance étant relus, pour compression, à la fréquence de 20,25 MHz, caractérisé en ce que le canal à bande étroite représente une largeur de bande utile de 6,75 MHz, les

9

composantes vidéo de luminance et de chrominance étant échantillonnées respectivement à 9 MHz et à 4,5 MHz et lesdits échantillons étant relus, pour compression, à une fréquence de 13,5 MHz.

10. Récepteur compatible avec la réception d'un signal transmis soit en large bande, soit en bande étroite dans un système selon l'une quelconque des revendications 1 à 9.

11. Récepteur selon la revendication 10 caractérisé en ce qu'il comprend des moyens uniques de démultiplexage du signal D2MAC en bande de base, et de décodage du signal vidéo, et en ce que lesdits moyens uniques de décodage du signal vidéo coopèrent avec des moyens de génération d'horloges fournissant d'une part un premier jeu d'horloges de décodage du signal vidéo en large bande, et d'autre part un second jeu d'horloges de décodage du signal vidéo en bande étroite, lesdits jeux d'horloges étant sélectivement activés pour piloter lesdits moyens uniques de décodage du signal vidéo en fonction de la largeur de bande du canal de transmission du signal reçu.

12. Récepteur selon l'une quelconque des revendications 10 et 11 caractérisé en ce que lesdits moyens uniques de décodage du signal vidéo comprennent :
   - un module unique de conversion analogique numérique du multiplex reçu en bande de base, fournissant des échantillons de luminance et de chrominance à une mémoire RAM vidéo unique, ledit module CAN étant sélectivement piloté par la fréquence de transmission comprimée correspondant à la largeur de bande du canal de transmission ;
   - des moyens uniques de gestion de ladite mémoire vidéo, selon des séquences d'écriture et de lecture distinctes.

13. Récepteur selon l'ine quelconque des revendicatations 10 à 12 caractérisé en ce qu'il comprend des moyens de reconstitution d'une image de format large à partir du signal d'image obtenu en sortie du démultiplexeur (101, 111), en centrant l'image de format étroit entre deux bandes visuelles non utiles (103, 113).

14. Récepteur selon la revendication 13, caractérisé en ce que lesdits moyens de reconstitution d'une image de format large sont constitués soit d'une interface spécifique intégrée entre le démultiplexeur 101 et le BRD 104, soit d'une séquence spécifique de lecture décomprimée des échantillons de la composante vidéo dans le démultiplexeur 111.

EP 0 433 199 A1

Fig. 1

Fig. 2

Fig. 3

Fig. 4

Fig. 8

Fig. 9

Fig. 10

Fig. 5

Fig. 6

Fig. 7

Office européen
des brevets

**RAPPORT DE RECHERCHE EUROPEENNE**

Numero de la demande

EP 90 46 0046

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | NTZ NACHRICHTEN TECHNISCHE ZEITSCHRIFT vol. 42, no. 9, septembre 1989, pages 544-554, Berlin, DE; H. SCHOENFELDER: "Probleme eines HDTV-Fernsehstudios" * page 546, colonne 2, ligne 17 - colonne 3, ligne 23, figure 2 * | 1,10 | H 04 N 7/20<br>H 04 N 7/01 |
| A | FREQUENZ vol. 41, nos. 1,2, janvier/février 1987, pages 3-10, Berlin, DE; H. SCHOENFELDER: "Farbfernsehen erhöhter Bildqualität durch Komponenten-Uebertragungstechnik" * figures 2,5; paragraphe 4.3 * | 1,2 | |
| A | PHILIPS TECHNICAL REVIEW vol. 43, no. 8, août 1987, pages 197-212, Eindhoven, NL; M.J.J.C. ANNEGARN et al.: "HD-MAC: a step forward in the evolution of television technology" * page 200, colonne 1, ligne 16 - colonne 2, ligne 15; figure 19; page 210, colonne 1, ligne 13ff * | 1 | |
| A | EP-A-0 287 174 (LA RADIOTECHNIQUE INDUSTRIELLE ET COMMERCIALE) * abrégé; colonne 3, lignes 16-21 * | 6 | H 04 N 5/00<br>H 04 N 7/00<br>H 04 N 11/00 |
| A | PATENT ABSTRACTS OF JAPAN vol. 12, no. 234 (E-629)(3081), 5 juillet 1988; & JP - A - 6326173 (MATSUSHITA) 03.02.1988 * le document en entier * | 10,12-14 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| BERLIN | 06-02-1991 | JONSSON B F |

EPO FORM 1503 03.82 (P0402)